# EUROPEAN PATENT SPECIFICATION

(11) **EP 1 766 871 B1**
(45) Date of publication and mention of the grant of the patent: **10.08.2011**
(21) Application number: 04749065.1
(22) Date of filing: 24.06.2004
(51) Int. Cl.: H04L 12/28

(54) **METHOD AND PROTOCOL FOR MANAGING DEVICES IN A PERSONAL AREA NETWORK**
VERFAHREN UND PROTOKOLL ZUR VERWALTUNG VON EINRICHTUNGEN IN EINEM PERSÖNLICHEN NETZWERK
PROCEDE ET PROTOCOLE PERMETTANT DE GERER DES DISPOSITIFS DANS UN RESEAU PERSONNEL

(43) Date of publication of application: 28.03.2007
(73) Proprietor: Telefonaktiebolaget L M Ericsson (publ), 164 83 Stockholm (SE)
(72) Inventor: JONSSON, Annika, S-128 33 Skarpnäck (SE); PETTERSSON, Mattias, S-222 40 Lund (SE); RUNE, Johan, S-181 30 Lidingö (SE); LARSSON, Tony, S-112 48 Stockholm (SE); MEHES, András, S-11730 Stockolm (SE)
(74) Representative: Norin, Klas
(86) International application number: PCT/SE2004/001027
(87) International publication number: WO 2006/001736

(56) References cited:
- EP-A1- 1 107 512
- WO-A1-01/43362
- WO-A2-02/39484
- US-A1- 2004 116 141

## Description

### FIELD OF THE INVENTION

The present invention relates to methods, devices and protocols in a short-range communication network, and more particularly it relates to methods, devices and protocols for managing devices in a personal area network.

### BACKGROUND OF THE INVENTION

Today it is common that a user of a mobile communication network has many different communication devices. For example, a user may have a mobile phone, a laptop and a Personal Digital Assistant (PDA). In addition to that, he may also have, for example, a digital camera and a wireless headset. For the user using one of his devices, there may be interesting to gain access to resources belonging to another of his devices or to other devices in the vicinity of the user. Therefore, some of the communication devices have short-range communication means suitable for this purpose. As an example, a laptop that does not have any external access possibilities by itself to e.g. a mobile communication network can be connected via a short-range communication means to a mobile phone having cellular access possibilities. Thereby, the laptop can take advantage of the cellular access possibilities of the mobile phone to get access to for example an Intranet or to the Internet. A short-range communication means may be for example a short-range radio link, e.g. Bluetooth, or an infrared link or a regular wire-line connection, see for example US2004/0116141.

Recent development has suggested to wirelessly connect communication devices being in the vicinity of a user into one short-range communication network, called a personal area network (PAN). The PAN is then constituted of the communication devices that are within short-range communication distance of each other. The devices belonging to the PAN may or may not belong to the user. As an example, a PAN may also comprise a printer situated in a room that the user is currently passing. The reach of such a personal area network is typically a couple of meters. A purpose of the PAN is for a device that is connected to the PAN to gain access to resources belonging to another of the devices belonging to the PAN, resulting in an enhanced experience for the user compared to the experience given by each device by itself. A user may for instance choose to bring only the necessary devices to perform the desired functionality during a particular time period.

Since the PAN is a dynamic network, devices may or may not belong to the network depending on if they for example are moved into or out of the range of the network. Therefore, there is a distinction between PAN members, defined as all devices that are allowed to be in the PAN, and PAN participants defined as the PAN members that are connected to the PAN at a specific moment. Examples of applications where resources belonging to one PAN participant could be shared with other PAN participants to enhance the experience of the user range from simple things like being able to access files at any other PAN participant and sharing the external access capabilities (e.g. cellular access) of one PAN participant between all PAN participants, and new, PAN aware applications that are really distributed between the PAN participants, making use of their different resources. Examples of such new PAN aware applications are a graphical user interface that is shared between units in a PAN and file sharing and data sharing applications over a PAN.

A Bluetooth Piconet can be considered as a prior art personal area network. The Bluetooth Piconet comprises up to 8 units, wherein one unit is a master unit and up to seven units are connected to the master unit as slaves to the master unit. Therefore, in a Bluetooth Piconet all traffic needs to go via the master unit, i.e. the Bluetooth Piconet is not transparent because the slaves do not know of the existence of each other.

To make the Bluetooth Piconet less hierarchical such that all units can contact each other, a Bluetooth PAN profile has been created which is applied on top of the Bluetooth Piconet. By using the Bluetooth PAN profile, a Bluetooth Piconet looks like any other Ethernet from layer 3's point of view. Although, in the Bluetooth PAN profile there is no way for a unit to find other units and to see the other units' capabilities in a meaningful way, such that the PAN can be dynamically managed.

Consequently, there exists a need for a method and a protocol for dynamically managing devices in a personal area network such that the PAN is transparent and such that the devices in the PAN can co-operate and fully make use of each other's resources for giving the user an enhanced experience. It would be most advantageous from a user perspective if the PAN with its different PAN participants would function to a large extent as a single unit rather than as separate devices.

### SUMMARY OF THE INVENTION

As mentioned above, recent development has suggested to wirelessly connect communication devices having short-range communication means and being in the vicinity of a user to thereby create a personal area network (PAN) for one user. Although, in today's solutions for creating such a Personal Area Network there is a problem that the created PANs are not transparent, and, consequently that the services residing in each device in the PAN cannot be shared in a simple way among the other devices in the PAN.

An object of the invention is thus to create a solution for managing devices in a PAN such that the PAN becomes transparent to the user, i.e. such that the user by using one of his devices in the PAN is able to discover characteristics of any other device in the PAN and to use services residing on any of the device in the PAN.

The above stated object is achieved by means of a method, a communication protocol, a PAN controller device and a computer readable program according to the independent claims. Preferred embodiments are set forth in the dependent claims.

The solution according to the invention makes it possible to manage devices in a Personal Area Network such that a user can take advantage of services residing in any other of the devices in the PAN than the device presently being used by the user. This is achieved by communicating PAN related information about each PAN participant to at least the PAN controller devices such that the PAN related information is updated and synchronized in the network, and by controlling by a so called PAN managing device the other PAN participants, wherein the PAN managing device is a PAN controller device that is presently used for controlling the other PAN participants.

According to a first aspect of the invention, a method is provided for managing devices in a Personal Area Network (PAN). Each device has short-range communication means for communication to other devices in the PAN, and the devices presently being within short-range communication distance from each other, called PAN participants, constitute the PAN. Each PAN participant is defined as either a PAN controller device or a PAN auxiliary device depending on characteristics of the device. The method comprises the steps of:
communicating PAN related information about each device to at least the PAN controller devices such that the PAN related information about each device is synchronized in at least the PAN controller devices; and
controlling, by a PAN managing device, at least one of the PAN participants, wherein the PAN managing device is a PAN controller device that is presently used for controlling the at least one of the PAN participants.

According to a second aspect of the invention, a communication protocol is provided for managing devices in a Personal Area Network (PAN). Each device has short-range communication means for communication to other devices in the PAN, and the devices presently being within short-range communication distance from each other, called PAN participants, constitute the PAN. Each PAN participant is defined as either a PAN controller device or a PAN auxiliary device depending on characteristics of the device. The communication protocol specifies messages for performing the steps of:
communicating PAN related information about each device to at least the PAN controller devices such that the PAN related information about each device is synchronized in at least the PAN controller devices; and
controlling, by a PAN managing device, at least one of the PAN participants, wherein the PAN managing device is a PAN controller device that is presently used for controlling the at least one of the PAN participants.

According to a third aspect of the invention, a PAN controller device is provided in a Personal Area Network (PAN) for managing devices in a PAN, wherein the devices presently being within short-range communication distance from each other, called PAN participants, constitute the PAN. The PAN controller device comprises:
short-range communication means for sending PAN related information about itself to at least the other PAN controller devices in the PAN and for receiving PAN related information about each other device in the PAN such that the PAN related information about each device in the PAN is synchronized in at least the PAN controller devices in the PAN; and
a control unit for controlling at least one of the PAN participants.

According to a preferred embodiment of the invention, the PAN managing device controls the other PAN participants by sending access selection commands used for controlling the use of external access means residing in any of the PAN participants.

According to another preferred embodiment of the invention, the communication of the PAN related information in the network is performed by sending messages comprising the PAN related information to a multicast group comprising the addresses of the PAN participants that need updated PAN related information.

An advantage with the present invention is that the user does not have to use the user interface of every device in order to perform tasks related to connectivity or specific functionality that resides in the different devices in the PAN. Instead, the user will be able to use the device present with the best user interface to carry out tasks in the PAN, independently of what device that actually hosts the desired function.

A further advantage of the invention is that the user will be able to see all PAN participants and the services and functionalities residing in each PAN participant via any of the devices in the PAN that has an appropriate user interface therefore, i.e. any PAN controller device. Through the PAN controller devices the user can get a condensed or detailed view of the PAN and the user can manage the PAN participants, as a single unit or a separate devices, depending on context and preference, in terms of e.g. connectivity, access selection and service access rights.

Another advantage of the invention is that it makes it possible for the user to remotely control another PAN participant via a PAN controller device to thereby for example improve the use of the resources in the PAN.

A further advantage of the invention is that it also makes it possible to control another PAN participant automatically, by e.g. using policies set by any node in a communication system, to for example control to what extent PAN participants should be allowed to use the functionality of other PAN participants, on a per device and/or per service level.

A still further advantage of the invention is that by communicating PAN related information according to the invention such that the PAN related information is updated and synchronized, the PAN managing device can change momentarily among the PAN controller devices in the PAN. This means that the user can change PAN controller device and still be able to manage his PAN and take advantage of services residing in any other of the devices in the PAN.

Another advantage of the invention is the use of specific multicast groups for communicating in the PAN, which makes the communication efficient.

A yet further advantage lies in the PAN Management Protocol defined by the invention, which gives the PAN participants, and especially the PAN controller devices, a necessary toolbox to efficiently maintain synchronized information and remotely control other PAN participants.

Also, another advantage of the invention is the enablement of export of the service interface of a Dedicated Link Device (DLD), which facilitates that other PAN participants than the DLD peer is able to use the services of the DLD.

### BRIEF DESCRIPTION OF THE DRAWINGS

Figure 1 shows a schematic figure of an exemplary Personal Area Network (PAN) in which the present invention can be used.
Figure 2 shows a schematic block diagram of a PAN according to the invention with its PAN controller devices and PAN auxiliary devices schematically described.
Figure 3 shows a message sequence scenario for messages used for synchronization of information in a PAN according to an embodiment of the invention.
Figure 4 shows another message sequence scenario for messages used for synchronization of information in a PAN according to an embodiment of the invention.
Figure 5 shows a message sequence scenario for messages used for control of access selection in a PAN according to an embodiment of the invention.
Figure 6 shows another message sequence scenario for messages used for control of access selection in a PAN according to an embodiment of the invention.

### DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

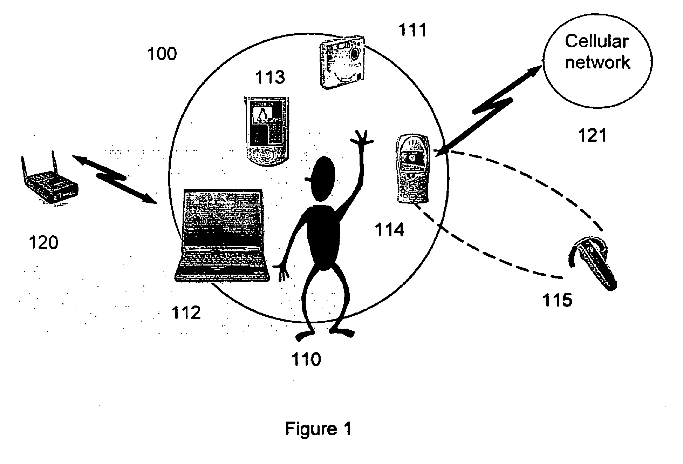

Figure 1 shows an example of a small personal area network (PAN) 100 which with the help of the present invention will work to a large extent as a single unit from a user's 110 perspective. The figure shows the exemplary PAN 100 with its PAN participants (i.e. devices that are allowed to be in the PAN, and that are presently connected to the PAN) and existing external access possibilities. The PAN 100 is constituted of the following devices: a laptop 112, a digital camera 111, a Personal Digital Assistant (PDA) 113, a mobile phone 114 and a headset 115. All these devices are members of a user's 100 PAN, and because they are presently within short-range communication distance of each other they are also PAN participants. The PAN 100 has two PAN participants with external access possibilities: The laptop 112, which has external access to a Wireless Local Area Network (WLAN) via a WLAN access point 120; and the mobile phone 114, which has external access to a cellular network 121, for example a GPRS network, a CDMA 2000 network, a UMTS network or any other cellular network. PAN participants that have external access possibilities are in this application called Global Access Points (GAPs). In a PAN managed according to the invention, the external accesses of the GAPs 112, 114 can be used by other PAN participants to provide external access to e.g. the Internet or intranet. The headset 115 in figure 1 represents another type of PAN device, in this application called a dedicated link device (DLD), because it can only communicate with one other device, called a DLD peer. In this example the headset 115 can only speak to its DLD peer, i.e. the mobile phone 114. Note that some PAN participants may have several roles simultaneously: In the example of figure 1, the mobile phone 114 is as well as being a networked PAN participant, also a GAP with cellular access, and a DLD peer to the headset 115.

A purpose of the invention is to allow a user to inter-connect an arbitrary number of his personal devices. The motivation for this is that the value that the user would be able to get from the devices in the PAN would outperform the sum of the values that he can get from each of the devices separately. However, in order to leverage the full potential of this possibility the PAN participants must be made to function to a large extent as a single unit rather than as separate devices, such that the user can use only the interface of one PAN participant but anyhow can gain access to services residing in other PAN participants. Therefore, the present invention aims at creating methods, protocols and PAN controller devices for managing a PAN such that the above mentioned purpose is fulfilled.

For being able to connect devices belonging to a user's Personal Area Network, such as in the PAN described in figure 1, each device in the PAN has short-range communication means for communication to other devices in the PAN. Also, the devices are defined as either PAN controller devices or PAN auxiliary devices depending on characteristics of the devices. For being able to manage the devices in a PAN according to the invention for achieving the purpose of the invention, PAN related information is communicated between the PAN participants such that the PAN related information is synchronised among the PAN participants. Also, the PAN participants are controlled from a PAN managing device, which is a PAN controller device that is presently used for controlling the other PAN participants. Since the PAN related information is updated and synchronized between the PAN participants, or at least the PAN controller devices, the PAN managing device role can change momentarily among the PAN controller devices, and the user of the PAN can manage and supervise its PAN from the PAN managing device. Also, the management of the PAN can be automatic, based on instruction command modes set by the user e.g. at upstart of the PAN.

As mentioned above, the devices in a PAN are defined as either PAN controller devices or PAN auxiliary devices depending on their capabilities. A PAN controller device is a PAN participant that can control the PAN and the PAN participants, and via which the user can manage his PAN through commands. Therefore, a PAN controller device should have a good user interface with good input/output capabilities for the user of the PAN. Other advantageous characteristics of a PAN controller device are reasonably good memory resources and processing power. Through the user interface the user can view and control PAN participants and PAN related information on a PAN wide basis, group basis or device basis. This is how user controlled remote control of PAN participants is initiated. The PAN participants can also be controlled by policies distributed e.g. by the PAN controller devices by using access selection mode commands discussed later in the document.

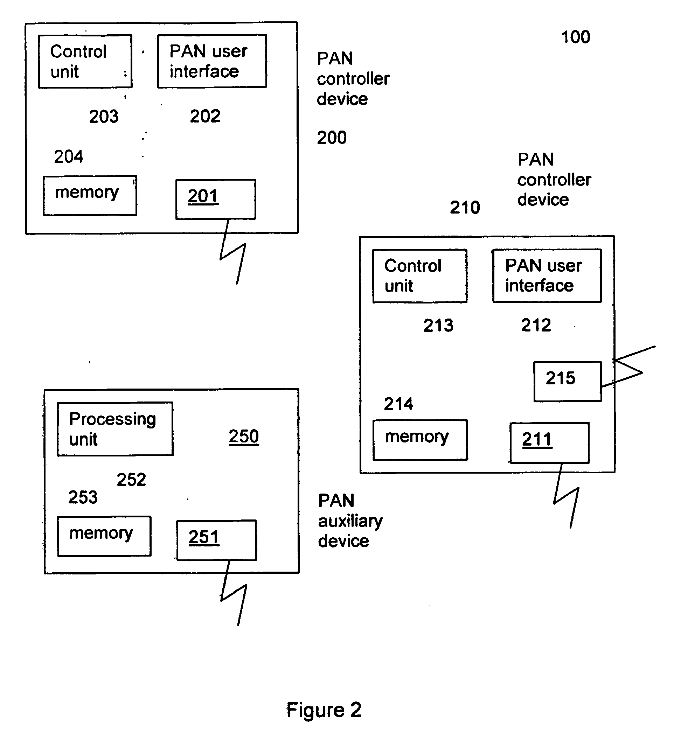

Figure 2 shows a schematic block diagram of a an exemplary PAN 100 managed according to the invention, wherein the PAN 100 of figure 2 comprises three PAN participants: Two PAN controller devices 200, 210 and one PAN auxiliary device 250. In figure 2, the exemplary PAN controller devices 200, 210 each comprises a short-range communication means 201, 211 for communicating with the PAN participants. Each PAN controller device 200, 210 also has a PAN user interface 202, 212 for managing a PAN. The PAN user interface 202, 212 has input characteristics making it possible for a user to manage a PAN and its PAN participants from each of the devices 200, 210 by inputting commands via the input characteristics of each of the PAN user interfaces. Each PAN user interface 202, 212 also has output characteristics for presenting the state of the PAN to the user, such that the user when using this invention for managing his PAN preferably can see a clear picture of his PAN, and wherein the picture of the PAN can advantageously be scaled up and down so that the user can see every PAN participant with more or less details, i.e. with more or less PAN related information. Each PAN controller device 200, 210 also has a control and processing unit 203, 213, which has software making it possible to manage a PAN and to control PAN participants according to the invention and to answer to requests for its PAN related information and to formulate own requests for PAN related information. Each device 200, 210 also has a memory 204, 214 for storing its own PAN related information and PAN related information received from other PAN participants. One of the PAN controller devices 210 also has external access means 215 that makes it possible for the PAN participants to get external access to e.g. a mobile communication network. Therefore, the PAN controller device 210 also becomes a Global Access Point (GAP). For controlling the PAN according to the invention, it would be necessary if at least one PAN controller is present in the PAN all the time. Because a mobile phone normally has a good user interface and because a mobile phone is often at hand for the user, it is a very suitable PAN controller device.

The PAN auxiliary device 250 in figure 2 comprises a short-range communication means 251 for communicating PAN related information to other PAN participants. It also comprises a processing unit 252 which at least need to have PAN functionality for being able to answer to requests for its PAN related information. The processing unit 252 may also have functionality for being able to formulate a request for PAN related information from other PAN participants. In comparison to the control and processing unit 203, 213 of the PAN controller device, the processing unit 252 of the PAN auxiliary device does not have any functionality for controlling other PAN participants. In addition, the PAN auxiliary device has a memory 253 for storing its own PAN related information, and, optionally, for storing PAN related information received from other PAN participants. Because a PAN auxiliary device has a limited input/output interface it cannot be used to manage the PAN. Likely examples of PAN auxiliary devices are therefore MP3 players and digital cameras. A PAN auxiliary device with some kind of limited input/output capabilities may also have a PAN user interface but with fewer possibilities than the user interface of a PAN controller device. For instance, remote control of other PAN participants and manipulation of PAN related information would not be allowed through the PAN user interface of a PAN auxiliary device.

It should be pointed out that there may be several PAN controller devices and PAN auxiliary devices in a PAN and an arbitrary number of the PAN controller devices may be simultaneously connected and available to the user for PAN management actions. The definition of PAN participants into PAN controllers and PAN auxiliary devices is preferably made by the PAN participants themselves based on the functions they have and the input/output capabilities they have for the moment.

When the exemplary PAN 100 of figure 2 is managed according to the invention, the PAN controller devices 200, 210 and the PAN auxiliary device 250 communicate with each other via the short-range communication means 201, 211, 251 to exchange PAN related information of each other such that the PAN related information of the PAN is synchronized. Each PAN controller device and each PAN auxiliary device always stores complete and updated information about itself in their memories 204, 214, 253. In addition to that, at least the PAN controller devices 200, 210 store received updated PAN related information from the other PAN participants such that they can see an updated and clear picture of the PAN on the screens of their PAN user interfaces 202, 212. Via the control units 203, 213, any of the PAN controller devices 200, 210 can then be used to control the other PAN participants via commands and messages of the invention. For example, the PAN controller devices may control the use of the external access means 215 by the PAN participants 200, 210, 250. The control can either be made automatically via commands already set in the control units 203, 213, or the user can control the PAN via commands from the PAN user interfaces 202, 212. Thanks to the updated and synchronised PAN related information, any of the PAN controller devices 200, 210 can be used to manage the PAN, and the user can momentarily change PAN controller device used for managing the PAN.

In the following, the step of communicating PAN related information such that the information is updated and synchronized between at least the PAN participants, and the step of controlling the PAN participants by a PAN controller device is described more in detail in relation to the description of the method of the invention and later on in relation to the protocol defining messages for realising the method of the invention.

The step of communicating PAN related information for synchronization purposes between at least the PAN controller devices is realized by each PAN participant sending PAN related information about itself to at least the PAN controller devices with a certain periodicity or at certain occasions, for example if PAN related information has changed for a PAN participant, e.g. if a PAN member has just become a PAN participant. Thereby, at least each PAN controller device would have synchronized PAN related information about the PAN participants.

Some examples of PAN related information are shown below. Some of the examples of PAN related information are per PAN participant and some are for a group of PAN participants:
- PAN member identity, i.e. the identity of a PAN participant. The identity may be connected to a user friendly name. Also, the identity may be connected to any type of security credentials or similar, such that the identity in combination with the security code will decide whether the PAN member is allowed to become part of the PAN (i.e. to become a PAN participant). Also, it is possible that the PAN participants as a group have a common identity in addition to their individual identities;
- Network configuration information, i.e. IP address of the PAN participant and, optionally, Ethernet address and default gateway for the PAN participant;
- PAN member list, i.e. a list of PAN member identities, i.e. all devices that have the right to be in the PAN;
- PAN participant list. I.e. a list of the devices currently connected to the PAN and identified by their PAN member identity;
- Available accesses. E.g. listing external accesses available in the PAN, and which PAN participant that can provide which external access.
- Currently used accesses. The currently used accesses can be shown for the whole PAN, per PAN participant or per session.

The minimum of PAN related information that has to be synchronized in the network is the PAN identity of each PAN member. In this case more PAN related information is especially requested when needed. Although, in another embodiment of the invention, it may be preferred to synchronize up to all PAN related information.

PAN related information may either be synchronized only between the PAN controller devices, or between all PAN participants, or in any other possible way preferable for a certain type of PAN related information.

Synchronization of PAN related information can be carried out in several different ways. A preferable way of synchronizing PAN related information according to the invention is to create a multicast group comprising the addresses of all PAN participants that should have updated PAN related information, e.g. all PAN controller devices. A message that is multicast to this group will be received by all the individual PAN participants that are members of this multicast group. Thereby, information is distributed in the system even if the sender does not know all addresses and PAN participants in the system (as is the case e.g. when a new PAN member connects to the network). In an alternative embodiment of the invention, the PAN related information may also be unicast to each PAN participant that should have the information. Information is sent on IP-level such that all PAN participants can be reached even if they are not in direct short-range communication distance from each other. I.e. information from a first PAN participant to a receiving PAN participant can be sent via a second PAN participant that is within short-range communication distance of both the first PAN participant and the receiving PAN participant.

The PAN related information sent for the synchronization procedure can be minimized e.g. by only sending the differences from previous multicast of PAN related information from a PAN participant. For example, if a mobile phone has lost external connection, only the information of the lost connection, together with the PAN-ID of the mobile phone, need to be distributed in the network for synchronization purposes. Thereby, communication resources are spared.

According to one embodiment of the invention, to assure that PAN related information is synchronised with at least a certain periodicity, the following procedure is suggested: If a PAN participant has not received any PAN related information in a certain time, it is instructed to multicast a request to all other PAN participants together with information of its own PAN related information. The PAN participants will then answer with multicast messages comprising their PAN related information, such that all PAN participants have exchanged PAN related information with each other. A similar procedure is used by a new PAN participant turning up in the PAN. An exemplary solution for achieving this synchronization is by using PAN messages that are defined according to the protocol of the invention. Examples of such messages are PAN generic query and PAN generic info messages explained more in detail further down in this application.

One of the key features that the present invention enables is the above mentioned step of controlling the PAN participants from a PAN managing device, which is a PAN controller device for the moment used for controlling the PAN. The invention provides commands that are sent from the PAN managing device to other PAN participants (including other PAN controller devices). Examples of needed commands for controlling the PAN are:
- Access selection commands (sent to the whole PAN or to an individual PAN participant and used for selecting access for the entire PAN, per PAN participant or per session);
- Commands for disconnecting PAN participant(s) from the PAN;
- Commands for connecting PAN member(s) to the PAN;
- Commands for inclusion and exclusion of PAN members.
- Commands for controlling the GAPs and the external accesses provided by the GAPs.

The access selection commands comprise for example commands for setting PAN participants in one of several access selection modes. One example of such an access selection mode is a remote control mode. In the remote control mode the PAN managing device informs the command receiving PAN participant(s) which of the GAPs the command receiving PAN participant(s) should use (possibly differentiated on a per application basis). There are two sub-modes of the remote control mode. The PAN managing device may either inform each PAN participant separately (so called per device GAP selection control) or inform all PAN participants together (group GAP selection control), preferably in a multicast message to all PAN participants.

Another example of an access selection mode is a remote controlled selection criteria mode. In this access selection mode, a PAN participant makes its own GAP selection, but based on criteria and priorities received from the PAN managing device. On a PAN basis there are two sub-modes of the remote controlled selection criteria mode. The PAN managing device may either transfer selection criteria and priorities to each PAN participant separately (per device selection criteria control) or to all PAN participants together (group selection criteria control).

A third example of an access selection mode is an independent mode. In this mode a PAN participant selects GAPs independently of the other PAN participants, and according to the PAN participant's internal criteria and priorities.

Commands may be set by a user via the PAN user interface of the PAN managing device, or it may be set by another node, for example by an operator node in a mobile communication network, which operator node sends the commands to a PAN controller device, which PAN controller device becomes the PAN managing device when it distributes the commands in the PAN.

One of the key components for realizing the steps in the method for managing a PAN according to the invention is a PAN Management Protocol (PMP) according to the invention. The PMP is a protocol for communication between PAN participants. The PMP provides the PAN participants (in particular the PAN controller devices) with a toolbox for performing the steps for PAN management across a PAN. PMP will implement the steps concerning the communication between PAN participants, i.e. the following steps:
- Synchronizing PAN related information between at least the PAN controller devices;
- Controlling PAN participants by sending commands from a PAN controller device to other PAN participants; and
- optionally, exporting PAN related information of a DLD by its DLD peer to at least the PAN controller devices.

The Internet Protocol (IP) is the set of protocols on which the communication in the PAN is based, according to the invention. The inventive PAN Management Protocol (PMP) is a protocol that is preferably implemented on the application level of the OSI-model, i.e. on top of UDP or TCP. Other possible vehicles for the protocol include e.g. HTTP and XML based information structures. The PAN management functions may also utilise mechanisms and information from lower protocol layers, e.g. ARP, IPv6 Neighbour Discovery, or even link layer functions like the Bluetooth Inquiry and Page procedures.

The implementation details of the protocol is not described in this document. The invention lies in the actual functions/mechanisms that need to be in place in a system for PAN management to make the PAN as transparent and intuitive to use for the user as possible. The needed mechanisms described in this document are implemented in PMP. Among other things, the PMP should have support for the following mechanisms:
- The PMP should be distributed among the PAN participants. I.e. It should not depend on a specific PAN member being present in the PAN for the PAN management to operate.
- Event notifications (optional). PAN participants can subscribe to information that they wish to keep synchronized.
- Presence announcement: PAN members announce their presence when they join the PAN.
- Graceful exit: A PAN participant should inform the other PAN participants when it is are about to disconnect from the PAN.
- Synchronization and spreading of Information: Can be done periodically and/or by specifically requesting it.

For optimising communication and for synchronizing PAN information, multicasting of information is used, as described earlier. According to an embodiment of the invention different multicast groups may be used depending on if different groups of PAN participants should have different information. Therefore, for example, a first multicast group comprising all PAN participants that understand PMP is created (e.g. to distribute PAN related information that concerns all PAN participants or to issue PAN wide commands such as generic access selection instructions). Also, the PAN controller devices may use a second multicast group for communication among PAN controller devices. A third possible multicast group is a multicast group between the GAPs with the purpose of sharing access specific information that is only relevant to the GAPs. The PMP multicast communication may be protected by group based security. Although, the security aspects of PAN communication is out of the scope of this application.

The PAN management protocol (PMP) defines certain messages necessary for realising the mechanisms defined above. Below some examples of such PMP messages are described. The following message types will be covered: PAN Generic Query, PAN Generic Info, PAN Access Query, PAN Access Info, Access Selection Mode Command and Access Selection Mode Acknowledgement. The messages PAN Generic Query/Info and PAN Access Query/Info are mainly used for distributing and synchronizing PAN related information in the PAN, whereas the messages Access Selection Mode Command/Acknowledgement are mainly used for controlling the selection of external accesses in the network.

### PAN generic query and PAN generic info messages

The purpose with these messages is to distribute and synchronize PAN related information. At least some of the PAN participants will store PAN related information about the other PAN participants. PAN related information regarding one PAN participant is distributed from the one PAN participant to the at least some of the PAN participants by a multicast message called PAN Generic Info. The PAN Generic Info message comprises:
- An identifier of the PAN participant, e.g. a link-layer address in the case all PAN devices uses some form of Ethernet locally within the PAN;
- The device type of the PAN participant, e.g. laptop, PDA or phone;
- The name of the device of the PAN participant, preferably a user friendly name, e.g. "IBM" or "T610", possibly set by the user;
- An identification of whether the PAN participant uses Bluetooth and the Bluetooth PAN profile with the following sub-categories:
   - If the device is connected, i.e. if it is a PAN participant; and
   - If the device is a Group Ad-hoc Network user (GN) or a Personal Area Network User (PANU) (two roles in the Bluetooth PAN profile); and
- An identification of whether the PAN participant uses IP, with the following sub-categories:
   - The IP address; and
   - Netmask; i.e. defines how much of the IP address that identifies the subnetwork of the host.

A PAN participant is free at any time to multicast a PAN Generic Info message describing itself.

The PAN Generic Info message may be sent either periodically or when changes has occurred to a PAN participant. If messages are sent when changes have occurred to a PAN participant, the PAN participant may either send all its information or only the information that has changed, together with its identity. If messages are sent periodically, each PAN participant may either independently send its information, or it may be sent according to the following procedure:

A PAN participant may at any time request a PAN Generic Info message from each and every other PAN participant by multicasting a PAN Generic Query message. According to one embodiment of the invention, each PAN participant, preferably a PAN controller device, should send a PAN Generic Query message as soon as a pre-defined amount of time has passed since any device in the PAN sent such a PAN Generic Query message. The PAN Generic Query message doesn't contain any information at all more than the actual request of a PAN Generic Info message. A PAN device that receives a PAN Generic Query message must multicast a PAN Generic Info message in response. A PAN participant that sends a PAN Generic Query message must after sending a PAN Generic Query message also send a PAN Generic Info message. As all messages are multicast, the result of one PAN Generic Query message sent in the network, is that all PAN Generic Information in the network is distributed and synchronized.

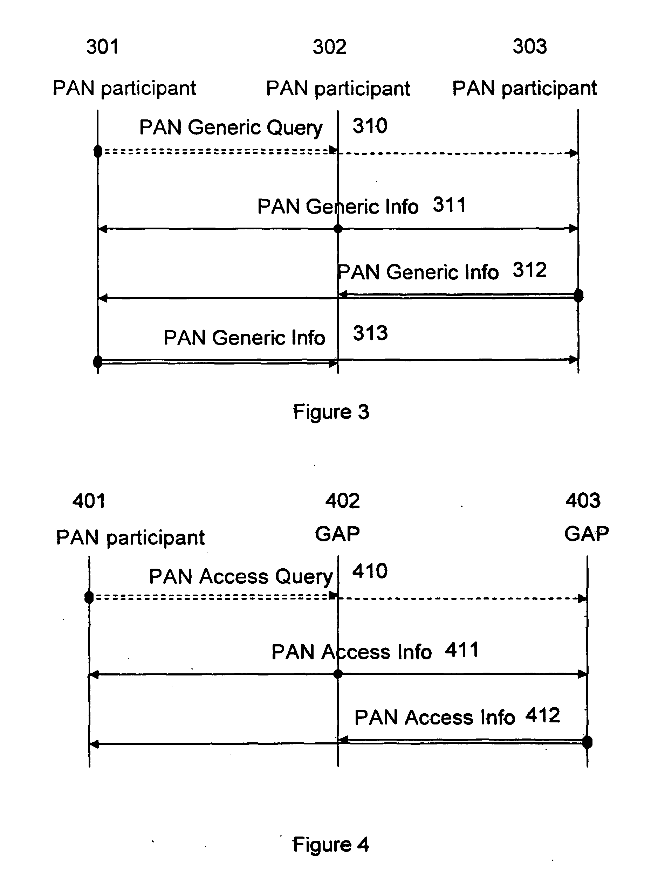

An example of a message sequence scenario for distributing and synchronizing information by using the PAN Generic Query and PAN Generic Info messages as described above is shown in figure 3. According to figure 3, a first PAN participant 301 multicasts a PAN Generic Query message 310 to all other PAN participants, in figure 3 the second PAN participant 302 and the third PAN participant 303. The PAN Generic Query message may be sent due to e.g. that a pre-defined amount of time has elapsed since information was synchronized last time in the system. The second PAN participant 302 answers the Generic Query message 310 by multicasting a PAN Generic Info message 311 describing himself to the other PAN participants 301, 303. Simultaneously and in the same way, the third PAN participant 303 answers the PAN Generic Query message 310 by also multicasting a PAN Generic Info message 312 describing himself to the other PAN participants 301, 302. Also, the first PAN participant 301 multicasts a PAN Generic Info message 313 after multicasting the PAN Generic Query message 310. Thereby, the PAN information is distributed and synchronised within all PAN participants 301, 302, 303 in the PAN of figure 3.

### PAN Access Query and PAN Access Info messages

The messages PAN Access Query and PAN Access Info are used for spreading and synchronizing information regarding the different external network accesses that are available in the PAN. Both PAN Access Query and PAN Access Info are preferably multicasted. The PAN Access Query message is used to request access information from the available global access points (GAPs). The PAN Access Query will either be multicasted to all PAN participants and ignored by the PAN participants that are not GAPs or it will only be sent to the GAPs. As a reply to the PAN Access Query message, each GAP will send a PAN Access Info message. The PAN Access Query message is optional and is mainly used by PAN members that has recently connected to the PAN and need to update the access related information. The PAN Access Info message is used to send the actual access related information to all PAN participants that are interested in such information. The PAN Access Info message is sent for any of the following reasons: As a response to a PAN access query; because a certain time has elapsed since last PAN access info message was sent in the PAN, i.e. periodically; or because a change in the access information has occurred, e.g. because the status of the access of a GAP has changed. The way the PAN Access information is distributed and synchronized in the system is similar to the way it is described for PAN Generic Info described above.

The PAN Access Info message contains the following information:
- An identifier that identifies the GAP sending the message, e.g. link-layer address, IP address or a name identifier.
- Number of accesses provided by the GAP
- Access name for each access
- Access type for each access
- Status for each access, e.g. if the access is up or down.
- Access specific information that is relevant for the particular type of access, e.g. capacity of the access, Quality of Service support, current traffic load, cost.

An example of a message sequence scenario where a PAN Access Info is sent as a response to a PAN Access Query is shown in 4. According to figure 4, a PAN participant 401 multicasts a PAN Access query 410, e.g. due to that the PAN participant 401 has just entered the network, to all GAPs in the PAN, in figure 4 the first GAP 402 and the second GAP 403. The first GAP 402 answers to the PAN Access Query message 410 by multicasting a PAN Access Info message 411 describing his access possibilities to the other PAN participants 401, 403. Simultaneously and in the same way, the second GAP 403 answers to the PAN Access Query 410 by also multicasting a PAN Access Info message 412 describing his access possibilities to the other PAN participants 401, 402. Thereby, the PAN access information is distributed to the PAN participant 401 and at the same time updated for the rest of the PAN participants such that the PAN access information is synchronized throughout the PAN.

A PAN member that joins the PAN and becomes a PAN participant should multicast a PAN Generic Info message and a PAN Access Info message to the PAN participants, to announce the PAN member's presence so that the PAN participants can update their PAN related information. As the PAN participants receives a PAN Generic Info message and a PAN Access Info message from the PAN member, they realise that this is a new PAN participant and sends a PAN generic Info message and a PAN Access Info message in return to the new PAN participant. Thereby, also the new PAN participant is updated with the generic information of the other PAN participants.

### Access Selection Mode Command and Access Selection Mode Acknowledgement messages

The Access Selection Mode Command message and the Access Selection Mode Acknowledgement message are used when a PAN controller device wants to control the way another PAN participant selects a GAP for its PAN external communication. The Access Selection Mode Command message, which is only sent by PAN controller devices, contains GAP selection instructions. A PAN participant that receives an Access Selection Mode Command message responds with an Access Selection Mode Acknowledgement message to acknowledge the receipt of the GAP selection instructions. The Access Selection Mode Acknowledgement message contains a result indicator, indicating whether the PAN participant is able to interpret and follow the received GAP selection instructions.

The Access Selection Mode Command message can be either multicast or unicast, depending on whether the included GAP selection instructions are intended for all PAN participants or just a single PAN participant. The Access Selection Mode Acknowledgement message is always unicast.

The Access Selection Mode Command message comprises:
- The access selection mode, exemplified by the following three modes, which all are described earlier in the application: Remote control mode; Remote controlled selection criteria mode; Independent mode;
- A GAP identifier (e.g. an IP address, a link layer address or a name), if the indicated access selection mode is Remote control mode; and
- Access selection criteria (e.g. a prioritised list of GAP identifiers and/or possibly per application GAP selection criteria), if the indicated access selection mode is Remote controlled selection criteria mode.

The Access Selection Mode Acknowledgement message comprises a result indicator indicating for example one of the following results: GAP selection instructions accepted, GAP selection instructions not accepted or GAP selection instructions partly accepted.

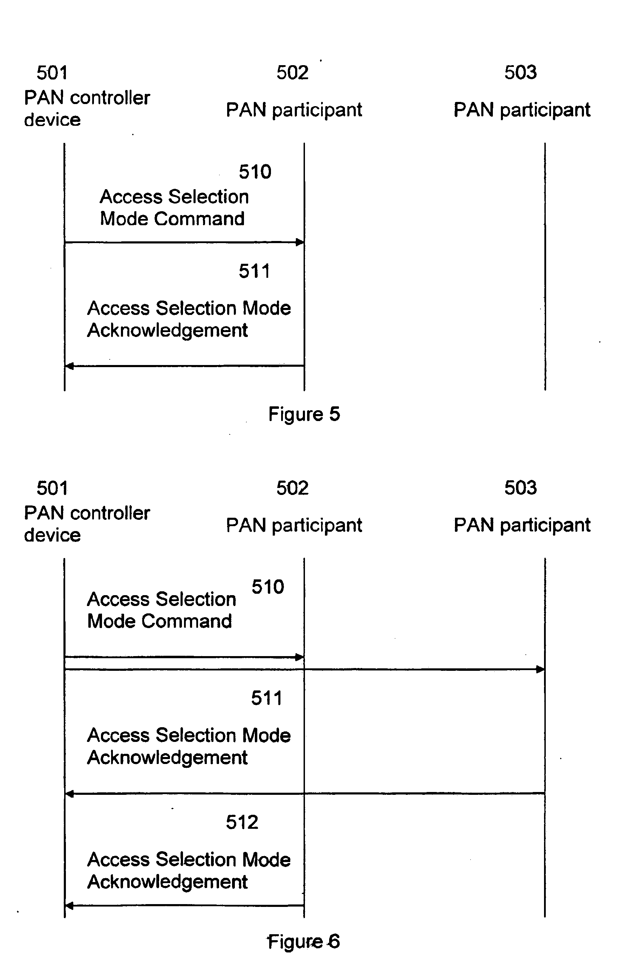

Examples of the message sequences for the Access Selection Mode Command and Access Selection Mode Acknowledgement messages are shown in figure 5 and figure 6.

Figure 5 shows a typical message sequence for a unicast version of the Access Selection Mode Command and Access Selection Mode Acknowledgement messages. In this example a PAN controller device 501 sends an Access Selection Mode Command 510 to a first PAN participant 502 as a unicast message, since the instructions are only intended for the first PAN participant, and not for the other PAN participants, represented by a second PAN participant 503. The first PAN participant 502 answers by sending an Access Selection Mode Acknowledgement message 511 to the PAN controller device 501 informing the PAN controller device whether the instructions have been accepted or not.

Figure 6 shows a typical message sequence for a multicast version of the Access Selection Mode Command and Access Selection Mode Acknowledgement messages. In this example, the PAN controller device 501 sends an Access Selection Mode Command 510 as a multicast message to all PAN participants in the PAN, represented by PAN participants 502 and 503, since the instructions are intended for all PAN participants. All PAN participants 502, 503 answer by each sending an Access Selection Mode Acknowledgement message 511, 512 to the PAN controller device 501 informing the PAN controller device whether the instructions have been accepted or not.

An alternative embodiment of the invention relates to the situation when a dedicated link device (DLD) is connected to the PAN via a point-to-point link to a DLD peer that is a normal networked PAN participant having second short-range communication means for communicating with the DLD. The protocols used on the link between the DLD and its DLD peer are generally application specific. Since the DLD does not communicate based on IP, it cannot communicate with the rest of the PAN. Therefore, it cannot make its services known and available to the other PAN participants by itself. The method according to the invention for managing a PAN can then be supplemented with an additional step of letting the DLD peer export PAN related information of the DLD, e.g. the service interface of the DLD, so that the service interface of the DLD becomes visible and accessible to the other PAN participants. Thus, the method according to the invention aids in making a service offered on a non-IP device in the PAN, e.g. a Bluetooth-only device, available to other PAN participants on the IP layer. An example of such a DLD and how the alternative embodiment of the invention can be used is shown for a Bluetooth enabled digital camera that only implements the Basic Imaging Profile [BT], which is a Bluetooth profile specific for handling cameras and built on a more general object exchange profile. Without using this invention, this imaging service will only be available to the PAN participant directly connected to the camera, i.e. the DLD peer of the digital camera. However, by letting the DLD peer translate from the Basic Imaging profile to the protocol used in the PAN and vice versa, the DLD peer can export the imaging service to the rest of the PAN, and the other PAN participants will be able to take advantage of the imaging service of the camera. The DLD peer will then preferably send a multicast message to the PAN participants comprising PAN related information of the DLD.

### Legacy device support

Legacy devices, i.e. devices that communicate based on IP but that do not have any PMP support, will be quite commonly used for a period of time. The PAN can therefore comprise devices with PMP support as well as devices without PMP support. These types of scenarios are important and are supported by the PAN management methods and the PMP according to this invention.

This is handled e.g. by introducing small "tricks" that the method and the PMP according to the invention can use to communicate with control legacy devices. These small "tricks" can for instance be to use standard protocols (e.g. Bluetooth or DHCP (Dynamic Host Configuration Protocol)) that the legacy devices have support for. This can come to use in the following example:
- When Disconnecting a PAN participant. This can be done for PMP enabled devices via PMP with a simple command to the PAN participant in question that it should disconnect. For legacy devices, on the other hand, it can for example be done with Bluetooth (if Bluetooth is used). This will however require that PMP can obtain and understand the point-to-point structure of the Bluetooth network (e.g. Piconet), so that PMP can instruct the corresponding PAN device to disconnect the legacy device in question. The disconnection procedure is shown in the following example: A PAN controller device instructs, by using PMP, a PAN participant that can communicate to the legacy device to disconnect the legacy device. The PAN participant then uses Bluetooth (if the legacy device is connected via Bluetooth) to disconnect the legacy device.
The details for the "tricks" in question are not specified in detail. It is however important to understand that PMP is extendable to also handle the cases with legacy devices.

The methods for PAN management and the PAN management protocols described in this application are specifically designed for PANs and the issues that arise when trying to establish and maintain a PAN in a user-friendly way. The invention deals with many of the network related issues like addressing, access discovery and access selection and will involve several layers in the protocol stack, e.g. the link layer, the network layer and the application layer. Prior art service discovery protocols, like UPnP (Universal Plug and Play), Jini, Rendezvous and SLP (Service Location Protocol) are designed for discovering services on a higher layer, e.g. printers, file servers etc. These protocols are mainly targeted at local area networks and do not consider PAN specific requirements for management. They do however provide protocols and mechanisms that are useful in a PAN environment for doing generic service discovery within the PAN as well as outside the PAN. Such a generic service discovery protocol used in the PAN will complement the PAN management methods and protocols described in this application. The PAN management methods and protocols will provide many of the lower layer management functions and the service discovery protocol will handle actual user level services.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method for managing devices in a Personal Area Network, hereinafter called PAN (100), wherein each device has short-range communication means (201, 211, 251) for communication to other devices in the PAN, and wherein the devices presently being within short-range communication distance from each other, called PAN participants (200, 210, 250), constitute the PAN, and wherein each PAN participant is defined as either a PAN controller device (200, 210) or a PAN auxiliary device (250) depending on characteristics of the device, **characterized in that** the method comprises the steps of:
synchronizing between at least the PAN controller devices (200, 210) PAN related information about each device in the PAN by communicating said PAN related information about each device to at least the PAN controller devices (200, 210);
controlling, by a PAN managing device (200 or 210), at least one of the PAN participants, wherein the PAN managing device is a PAN controller that for the moment is used for controlling the at least one of the PAN participants; and
controlling, by the PAN managing device that for the moment is used for controlling the at least one of the PAN participants, the use by the at least one of the PAN participants of external access means residing in any of the PAN participants.

2. The method according to claim 1, wherein the PAN managing device (200 or 210) is a user controller device, which is the PAN controller device presently being used by a user.

3. The method according to claim 1 or 2, wherein a PAN participant is defined as a PAN controller device if the PAN participant has a user interface (202, 212) with input characteristics making it possible for a user to manage the PAN from the PAN participant and with output characteristics for presenting the state of the PAN to the user.

4. The method according to any of claims 1-3, wherein at least one of the devices, called a Global Access Point, hereinafter called GAP (210) has an external access means (215) for making communication with an external network possible, and wherein the step of controlling also comprises that the PAN managing device (200 or 210) controls the at least one of the PAN participants by sending an access selection command to the at least one of the PAN participants (200, 210, 250), which access selection command is used for controlling the use of the external access means (215) by the at least one of the PAN participants.

5. The method according to claim 4, wherein the access selection command comprises a command for setting the at least one of the PAN participants (200, 210, 250) into an access selection mode.

6. The method according to claim 5 wherein the access selection mode is a remote control mode, in which mode the at least one of the PAN participants (200, 210, 250) is instructed how to use the at least one of the GAPs (210) for its external access.

7. The method according to claim 5 wherein the access selection mode is a remote controlled selection criteria mode, in which mode the at least one of the PAN participants (200, 210, 250) is instructed to use the at least one of the GAPs for its external access based on criteria and priorities received from the PAN managing device (200 or 210).

8. The method according to claim 5 wherein the access selection mode is an independent mode, in which mode the at least one of the PAN participants (200, 210, 250) is instructed to use the at least one of the GAPs based on its internal criteria and priorities.

9. The method according to any of claims 1-8 wherein the PAN related information communicated to at least the PAN controller devices (200, 210) comprises at least an identity of each PAN participant.

10. The method according to any of claims 1-9, wherein the step of communicating is performed by sending messages to a multicast group comprising at least the PAN controller devices (200, 210).

11. The method according to any of claims 1-10, wherein the step of communicating is performed by each PAN participant (200, 210, 250) sending PAN related information about itself to at least the PAN controller devices (200, 210) every time a change occurs in the PAN participant's PAN related information.

12. The method according to any of claims 1-11, wherein the step of communicating is performed by each PAN participant (200, 210, 250) sending PAN related information about itself when receiving a request to send its PAN related information.

13. The method according to any of claims 1-12, wherein the step of communicating is performed periodically.

14. The method according to any of claims 1-13, wherein at least one of the devices is a dedicated link device, hereinafter called DLD (115), which short range communication means is only capable of communicating with a DLD peer (114), and wherein the DLD peer is a device that has second short-range communication means adapted for communication with the DLD, in addition to its short-range communication means for communication to other devices in the PAN, wherein the method also comprises the step of:
exporting, by the DLD peer, PAN related information of the DLD to at least the PAN controller devices (200, 210).

15. A communication protocol for managing devices in a Personal Area Network, hereinafter called PAN (100), wherein each device has short-range communication means (201, 211, 251) for communication to other devices in the PAN, and wherein the devices presently being within short-range communication distance from each other, called PAN participants (200, 210, 250), constitute the PAN, and wherein each PAN participant is defined as either a PAN controller device (200, 210) or a PAN auxiliary device (250) depending on characteristics of the device, **characterized in that** the communication protocol specifies messages for performing the steps of:
synchronizing between at least the PAN controller devices (200, 210) PAN related information about each device in the PAN by communicating said PAN related information about each device to at least the PAN controller devices (200, 210);
controlling, by a PAN managing device (200 or 210), at least one of the PAN participants, wherein the PAN managing device is a PAN controller that for the moment is used for controlling the at least one of the PAN participants; and
controlling, by the PAN managing device that for the moment is used for controlling the at least one of the PAN participants, the use by the at least one of the PAN participants of external access means residing in any of the PAN participants.

16. The communication protocol according to claim 15, wherein at least one of the devices, called a Global Access Point, hereinafter called GAP (210) has an external access means (215) for making communication with an external network possible, and wherein the step of controlling also comprises that the PAN managing device (200 or 210) controls the at least one of the PAN participants by sending an access selection command message to the at least one of the PAN participants (200, 210, 250), which access selection command message is used for controlling the use of the external access means (215) by the at least one of the PAN participants.

17. The communication protocol according to claim 16, wherein the access selection command message is an access selection mode command message for setting the at least one of the PAN participants (200, 210, 250) into an access selection mode.

18. The communication protocol according to claim 17 wherein the access selection mode is a remote control mode, in which mode the access selection mode command message comprises an identifier of one of the at least one GAPs (210) that the at least one of the PAN participants (200, 210, 250) should use for its external access.

19. The communication protocol according to claim 17 wherein the access selection mode is a remote controlled selection criteria mode, in which mode the access selection mode command message comprises an access selection criteria defining a criteria on which the at least one of the PAN participants (200, 210, 250) should base its usage of the access selection means.

20. The communication protocol according to claim 17 wherein the access selection mode is an independent mode, in which mode the at least one of the PAN participants (200, 210, 250) is instructed to use the at least one of the GAPs based on its internal criteria and priorities.

21. The communication protocol according to any of claims 15-20 wherein the PAN related information communicated to at least the PAN controller devices (200, 210) comprises at least an identity of each PAN participant.

22. The communication protocol according to any of claims 15-21, wherein the step of communicating is performed by sending messages to a multicast group comprising at least the PAN controller devices (200, 210).

23. The communication protocol according to any of claims 15-22, wherein the step of communicating is performed by each PAN participant (200, 210, 250) sending a PAN Generic Info message comprising PAN related information about itself to at least the PAN controller devices (200, 210) every time a change occurs in the PAN participant's PAN related information.

24. The communication protocol according to any of claims 15-23, wherein the step of communicating is performed by each PAN participant (200, 210, 250) sending a PAN Generic Info message comprising PAN related information about itself when receiving a request to send its PAN related information.

25. The communication protocol according to any of claims 15-24, wherein at least one of the devices is a dedicated link device, hereinafter called DLD (115), which short range communication means is only capable of communicating with a DLD peer (114), and wherein the DLD peer is a device that has second short-range communication means especially adapted for communication with the DLD, in addition to its short-range communication means for communication to other devices in the PAN, wherein the communication protocol also specifies a message for performing the step of:
exporting, by the DLD peer, PAN related information of the DLD to at least the PAN controller devices (200, 210).

26. A PAN controller device (200, 210) in a Personal Area Network, hereinafter called PAN (100) for managing devices in a PAN, wherein the devices presently being within short-range communication distance from each other, called PAN participants, constitute the PAN, **characterized in that** the PAN controller device comprises:
short-range communication means (201, 211) for communicating PAN related information about itself to at least the other PAN controller devices in the PAN and for synchronizing PAN related information about each device in the PAN in at least the PAN controller devices in the PAN; and
a control unit (203, 213) for controlling at least one of the PAN participants when the PAN controller device for the moment is used for controlling the at least one of the PAN participants; and wherein said control unit (203, 213) is arranged to control the use by the at least one of the PAN participants of external access means residing in any of the PAN participants.

27. The PAN controller device according to claim 26 **characterized in that** the PAN controller device further comprises:
a PAN user interface (202, 212) having input characteristics making it possible for a user to manage the PAN from the device and having output characteristics for presenting the state of the PAN to the user.

28. The PAN controller device according to claim 26 or 27, wherein the control unit (203, 213) is arranged to control the use by the at least one of the PAN participants of an external access means residing in any of the PAN participants by triggering an access selection command that is sent by the short-range communication means (201, 211) to the at least one of the PAN participants.

29. The PAN controller device according to claim 28 wherein the access selection command is triggered as a result of an action by the user at the input characteristics of the user interface (202, 212).

30. The PAN controller device according to claim 28 or 29, wherein the access selection command comprises a command for setting the at least one of the PAN participants into an access selection mode.

31. The PAN controller device according to any of claims 26-30 wherein the short-range communication means (201, 211) is adapted to send PAN related information to a multicast group comprising at least the PAN controller devices in the PAN (100).

32. The PAN controller device according to any of claims 26-31 wherein the device also comprises a memory (204, 214) for storing PAN related information about itself and the other PAN participants.

33. A computer program product loadable into a memory of a digital computer device residing in each device in the PAN, wherein the computer program product comprises software code portions for performing the method of any of claims 1-14 when the computer program product is run on the computer device.

## Patentansprüche

1. Verfahren zur Verwaltung von Vorrichtungen in einem Netz für den persönlichen Bereich, im Folgenden als PAN bezeichnet (100), wobei jede Vorrichtung über Nahbereichs-Kommunikationsmittel (201, 211, 251) für Kommunikation mit anderen Vorrichtungen in dem PAN verfügt und wobei die Vorrichtungen, die gegenwärtig im Nahbereich-Kommunikationsabstand voneinander sind, die als PAN-Teilnehmer (200, 210, 250) bezeichnet werden, das PAN bilden, und wobei jeder PAN-Teilnehmer in Abhängigkeit von Eigenschaften der Vorrichtung als entweder eine PAN-Steuerungsvorrichtung (200, 210) oder eine PAN-Hilfsvorrichtung (250) definiert ist, **dadurch gekennzeichnet, dass** das Verfahren die folgenden Schritte umfasst:
Synchronisieren, zwischen zumindest den PAN-Steuerungsvorrichtungen (200, 210), von PAN-bezogenen Informationen über jede Vorrichtung in dem PAN durch Kommunizieren der PAN-bezogenen Informationen über jede Vorrichtung an zumindest die PAN-Steuerungsvorrichtungen (200, 210);
Steuern, durch eine PAN-Verwaltungsvorrichtung (200 oder 210), mindestens eines der PAN-Teilnehmer, wobei die PAN-Verwaltungsvorrichtung eine PAN-Steuerung ist, die für den Moment zur Steuerung des mindestens einen der PAN-Teilnehmer verwendet wird; und
Steuern, durch die PAN-Verwaltungsvorrichtung, die für den Moment zum Steuern des mindestens einen der PAN-Teilnehmer verwendet wird, der Verwendung von externen Zugangsmitteln, die in einem der PAN-Teilnehmer resident sind, durch den mindestens einen der PAN-Teilnehmer.

2. Verfahren nach Anspruch 1, wobei die PAN-Verwaltungsvorrichtung (200 oder 210) eine Benutzer-Steuerungsvorrichtung ist, die die PAN-Steuerungsvorrichtung ist, die gegenwärtig von einem Benutzer verwendet wird.

3. Verfahren nach Anspruch 1 oder 2, wobei ein PAN-Teilnehmer als eine PAN-Steuerungsvorrichtung definiert ist, wenn der PAN-Teilnehmer eine Benutzerschnittstelle (202, 212) mit Eingabeeigenschaften, die es einem Benutzer ermöglichen, das PAN von dem PAN-Teilnehmer zu verwalten, und mit Ausgabeeigenschaften, um dem Benutzer den Status des PAN zu präsentieren, aufweist.

4. Verfahren nach einem der Ansprüche 1 - 3, wobei mindestens eine der Vorrichtungen, die ein globaler Zugangspunkt genannt wird, im Folgenden als GAP bezeichnet (210), ein externes Zugangsmittel (215) aufweist, um Kommunikation mit einem externen Netz zu ermöglichen, und wobei der Schritt zum Steuern außerdem umfasst, dass die PAN-Verwaltungsvorrichtung (200 oder 210) den mindestens einen der PAN-Teilnehmer durch Senden eines Zugangsauswahlbefehls an den mindestens einen der PAN-Teilnehmer (200, 210, 250) steuert, wobei der Zugangsauswahlbefehl zum Steuern der Verwendung des externen Zugangsmittels (215) durch den mindestens einen der PAN-Teilnehmer verwendet wird.

5. Verfahren nach Anspruch 4, wobei der Zugangsauswahlbefehl einen Befehl zum Einstellen des mindestens einen der PAN-Teilnehmer (200, 210, 250) in einen Zugangsauswahlmodus umfasst.

6. Verfahren nach Anspruch 5, wobei der Zugangsauswahlmodus ein Fernbedienungsmodus ist, wobei in dem Modus der mindestens eine der PAN-Teilnehmer (200, 210, 250) angewiesen wird, wie der mindestens eine der GAPs (210) für seinen externen Zugang zu verwenden ist.

7. Verfahren nach Anspruch 5, wobei der Zugangsauswahlmodus ein fernbedienter Auswahlkriterienmodus ist, wobei in dem Modus der mindestens eine der PAN-Teilnehmer (200, 210, 250) angewiesen wird, den mindestens einen der GAPs für seinen externen Zugang basierend auf Kriterien und Prioritäten, die von der PAN-Verwaltungsvorrichtung (200 oder 210) empfangen werden, zu verwenden.

8. Verfahren nach Anspruch 5, wobei der Zugangsauswahlmodus ein unabhängiger Modus ist, wobei in dem Modus der mindestens eine der PAN-Teilnehmer (200, 210, 250) angewiesen wird, den mindestens einen der GAPs basierend auf seinen internen Kriterien und Prioritäten zu verwenden.

9. Verfahren nach einem der Ansprüche 1 - 8, wobei die PAN-bezogenen Informationen, die an zumindest die PAN-Steuerungsvorrichtungen (200, 210) kommuniziert werden, mindestens eine Identität jedes PAN-Teilnehmers umfassen.

10. Verfahren nach einem der Ansprüche 1 - 9, wobei der Schritt zum Kommunizieren durch Senden von Nachrichten an eine Multicastgruppe, mindestens die PAN-Steuerungsvorrichtungen (200, 210) umfasst, durchgeführt wird.

11. Verfahren nach einem der Ansprüche 1 - 10, wobei der Schritt zum Kommunizieren durchgeführt wird, indem jeder PAN-Teilnehmer (200, 210, 250) PAN-bezogene Informationen über sich selbst an zumindest die PAN-Steuerungsvorrichtungen (200, 210) jedes Mal, wenn eine Änderung in den PAN-bezogenen Informationen des PAN-Teilnehmers vorkommt, sendet.

12. Verfahren nach einem der Ansprüche 1 - 11, wobei der Schritt zum Kommunizieren durchgeführt wird, indem jeder PAN-Teilnehmer (200, 210, 250) PAN-bezogene Informationen über sich selbst sendet, wenn er eine Anforderung zum Senden seiner PAN-bezogenen Informationen empfängt.

13. Verfahren nach einem der Ansprüche 1 - 12, wobei der Schritt zum Kommunizieren regelmäßig durchgeführt wird.

14. Verfahren nach einem der Ansprüche 1 - 13, wobei mindestens eine der Vorrichtungen eine dedizierte Verbindungsvorrichtung ist, im Folgenden als DLD bezeichnet (115), deren Nahbereichs-Kommunikationsmittel nur zur Kommunikation mit einem DLD-Partner (114) imstande ist, und wobei der DLD-Partner eine Vorrichtung ist, die zusätzlich zu ihren Nahbereichs-Kommunikationsmitteln zum Kommunizieren mit anderen Vorrichtungen in dem PAN zweite Nahbereichs-Kommunikationsmittel aufweist, die für Kommunikation mit dem DLD angepasst sind, wobei das Verfahren außerdem den folgenden Schritt umfasst:
Exportieren, durch den DLD-Partner, PAN-bezogener Informationen des DLD an zumindest die PAN-Steuerungsvorrichtungen (200, 210).

15. Kommunikationsprotokoll zur Verwaltung von Vorrichtungen in einem Netz für den persönlichen Bereich, im Folgenden als PAN bezeichnet (100), wobei jede Vorrichtung über Nahbereichs-Kommunikationsmittel (201, 211, 251) für Kommunikation mit anderen Vorrichtungen in dem PAN verfügt und wobei die Vorrichtungen, die gegenwärtig im Nahbereichs-Kommunikationsabstand voneinander sind, die als PAN-Teilnehmer (200, 210, 250) bezeichnet werden, das PAN bilden, und wobei jeder PAN-Teilnehmer in Abhängigkeit von Eigenschaften der Vorrichtung als entweder eine PAN-Steuerungsvorrichtung (200, 210) oder eine PAN-Hilfsvorrichtung (250) definiert ist, **dadurch gekennzeichnet, dass** das Kommunikationsprotokoll Nachrichten zum Durchführen der folgenden Schritte spezifiziert:
Synchronisieren, zwischen zumindest den PAN-Steuerungsvorrichtungen (200, 210), von PAN-bezogenen Informationen über jede Vorrichtung in dem PAN durch Kommunizieren der PAN-bezogenen Informationen über jede Vorrichtung an zumindest die PAN-Steuerungsvorrichtungen (200, 210);
Steuern, durch eine PAN-Verwaltungsvorrichtung (200 oder 210), mindestens eines der PAN-Teilnehmer, wobei die PAN-Verwaltungsvorrichtung eine PAN-Steuerung ist, die für den Moment zur Steuerung des mindestens einen der PAN-Teilnehmer verwendet wird; und
Steuern, durch die PAN-Verwaltungsvorrichtung, die für den Moment zum Steuern des mindestens einen der PAN-Teilnehmer verwendet wird, der Verwendung von externen Zugangsmitteln, die in einem der PAN-Teilnehmer resident sind, durch den mindestens einen der PAN-Teilnehmer.

16. Kommunikationsprotokoll nach Anspruch 15, wobei mindestens eine der Vorrichtungen, die ein globaler Zugangspunkt genannt wird, im Folgenden als GAP bezeichnet (210), ein externes Zugangsmittel (215) aufweist, um Kommunikation mit einem externen Netz zu ermöglichen, und wobei der Schritt zum Steuern außerdem umfasst, dass die PAN-Verwaltungsvorrichtung (200 oder 210) den mindestens einen der PAN-Teilnehmer durch Senden einer Zugangsauswahlbefehlsnachricht an den mindestens einen der PAN-Teilnehmer (200, 210, 250) steuert, wobei die Zugangsauswahlbefehlsnachricht zum Steuern der Verwendung des externen Zugangsmittels (215) durch den mindestens einen der PAN-Teilnehmer verwendet wird.

17. Kommunikationsprotokoll nach Anspruch 16, wobei die Zugangsauswahlbefehlsnachricht eine Zugangsauswahlmodus-Befehlsnachricht zum Einstellen des mindestens einen der PAN-Teilnehmer (200, 210, 250) in einen Zugangsauswahlmodus ist.

18. Kommunikationsprotokoll nach Anspruch 17, wobei der Zugangsauswahlmodus ein Fernbedienungsmodus ist, wobei in dem Modus die Zugangsauswahlmodus-Befehlsnachricht eine Kennzeichnung eines der mindestens einen GAPs (210) umfasst, den der mindestens eine der PAN-Teilnehmer (200, 210, 250) für seinen externen Zugang verwenden soll.

19. Kommunikationsprotokoll nach Anspruch 17, wobei der Zugangsauswahlmodus ein fernbedienter Auswahlkriterienmodus ist, wobei in dem Modus die Zugangsauswahlmodus-Befehlsnachricht Zugangsauswahlkriterien umfasst, die Kriterien definieren, auf die der mindestens eine der PAN-Teilnehmer (200, 210, 250) seine Verwendung der Zugangsauswahlmittel basieren soll.

20. Kommunikationsprotokoll nach Anspruch 17, wobei der Zugangsauswahlmodus ein unabhängiger Modus ist, wobei in dem Modus der mindestens eine der PAN-Teilnehmer (200, 210, 250) angewiesen wird, den mindestens einen der GAPs basierend auf seinen internen Kriterien und Prioritäten zu verwenden.

21. Kommunikationsprotokoll nach einem der Ansprüche 15 - 20, wobei die PAN-bezogenen Informationen, die an zumindest die PAN-Steuerungsvorrichtungen (200, 210) kommuniziert werden, mindestens eine Identität jedes PAN-Teilnehmers umfassen.

22. Kommunikationsprotokoll nach einem der Ansprüche 15 - 21, wobei der Schritt zum Kommunizieren durch Senden von Nachrichten an eine Multicastgruppe, die mindestens die PAN-Steuerungsvorrichtungen (200, 210) umfasst, durchgeführt wird.

23. Kommunikationsprotokoll nach einem der Ansprüche 15 - 22, wobei der Schritt zum Kommunizieren durchgeführt wird, indem jeder PAN-Teilnehmer (200, 210, 250) eine PAN-Generic-Info-Nachricht, die PAN-bezogene Informationen über sich selbst umfasst, an zumindest die PAN-Steuerungsvorrichtungen (200, 210) jedes Mal, wenn eine Änderung in den PAN-bezogenen Informationen des PAN-Teilnehmers vorkommt, sendet.

24. Kommunikationsprotokoll nach einem der Ansprüche 15 - 23, wobei der Schritt zum Kommunizieren durchgeführt wird, indem jeder PAN-Teilnehmer (200, 210, 250) eine PAN-Generic-Info-Nachricht, die PAN-bezogene Informationen über sich selbst umfasst, sendet, wenn er eine Anforderung zum Senden seiner PAN-bezogenen Informationen empfängt.

25. Kommunikationsprotokoll nach einem der Ansprüche 15 - 24, wobei mindestens eine der Vorrichtungen eine dedizierte Verbindungsvorrichtung ist, im Folgenden als DLD bezeichnet (115), deren Nahbereichs-Kommunikationsmittel nur zur Kommunikation mit einem DLD-Partner (114) imstande ist, und wobei der DLD-Partner eine Vorrichtung ist, die zusätzlich zu ihren Nahbereichs-Kommunikationsmitteln zum Kommunizieren mit anderen Vorrichtungen in dem PAN zweite Nahbereichs-Kommunikationsmittel aufweist, die speziell für Kommunikation mit dem DLD angepasst sind, wobei das Kommunikationsprotokoll außerdem eine Nachricht zum Durchführen des folgenden Schritts spezifiziert:
Exportieren, durch den DLD-Partner, von PAN-bezogenen Informationen des DLD an zumindest die PAN-Steuerungsvorrichtungen (200, 210).

26. PAN-Steuerungsvorrichtung (200, 210) in einem Netz für den persönlichen Bereich, im Folgenden als PAN bezeichnet (100), zur Verwaltung von Vorrichtungen in einem PAN, wobei die Vorrichtungen, die gegenwärtig im Nahbereich-Kommunikationsabstand voneinander sind, die als PAN-Teilnehmer bezeichnet werden, das PAN bilden, **dadurch gekennzeichnet, dass** die PAN-Steuerungsvorrichtung umfasst:
Nahbereichs-Kommunikationsmittel (201, 211) zum Kommunizieren PAN-bezogener Informationen über sich selbst an zumindest die anderen PAN-Steuerungsvorrichtungen in dem PAN und zum Synchronisieren PAN-bezogener Informationen über jede Vorrichtung in dem PAN in zumindest den PAN-Steuerungsvorrichtungen in dem PAN; und
eine Steuereinheit (203, 213) zum Steuern mindestens eines der PAN-Teilnehmer, wenn die PAN-Steuerungsvorrichtung für den Moment für Steuerung des mindestens einen der PAN-Teilnehmer verwendet wird; und wobei die Steuereinheit (203, 213) angeordnet ist zur Steuerung der Verwendung von externen Zugangsmitteln, die in irgendeinem der PAN-Teilnehmer resident sind, durch den mindestens einen der PAN-Teilnehmer.

27. PAN-Steuerungsvorrichtung nach Anspruch 26, **dadurch gekennzeichnet, dass** die PAN-Steuerungsvorrichtung weiter umfasst:
eine PAN-Benutzerschnittstelle (202, 212) mit Eingabeeigenschaften, die es einem Benutzer ermöglichen, das PAN von der Vorrichtung zu verwalten, und mit Ausgabeeigenschaften, um dem Benutzer den Status des PAN zu präsentieren.

28. PAN-Steuerungsvorrichtung nach Anspruch 26 oder 27, wobei die Steuereinheit (203, 213) angeordnet ist zur Steuerung der Verwendung eines externen Zugangsmittels, das in irgendeinem der PAN-Teilnehmer resident ist, durch den mindestens einen der PAN-Teilnehmer durch Auslösen eines Zugangsauswahlbefehls, der von dem Nahbereichs-Kommunikationsmittel (201, 211) an den mindestens einen der PAN-Teilnehmer gesandt wird.

29. PAN-Steuerungsvorrichtung nach Anspruch 28, wobei der Zugangsauswahlbefehl als ein Ergebnis einer Handlung durch den Benutzer an den Eingabeeigenschaften der Benutzerschnittstelle (202, 212) ausgelöst wird

30. PAN-Steuerungsvorrichtung nach Anspruch 28 oder 29, wobei der Zugangsauswahlbefehl einen Befehl zum Einstellen des mindestens einen der PAN-Teilnehmer in einen Zugangsauswahlmodus umfasst.

31. PAN-Steuerungsvorrichtung nach einem der Ansprüche 26 - 30, wobei das Nahbereichs-Kommunikationsmittel (201, 211) angepasst ist zum Senden PAN-bezogener Informationen an eine Multicastgruppe, die zumindest die PAN-Steuerungsvorrichtungen in dem PAN (100) umfasst.

32. PAN-Steuerungsvorrichtung nach einem der Ansprüche 26 - 31, wobei die Vorrichtung außerdem einen Speicher (204, 214) zum Speichern PAN-bezogener Informationen über sich selbst und die anderen PAN-Teilnehmer umfasst.

33. Computerprogrammprodukt, das in einen Speicher einer digitalen Computervorrichtung, die in jeder Vorrichtung in dem PAN resident ist, ladbar ist, wobei das Computerprogrammprodukt Software-Codeabschnitte zum Ausführen des Verfahrens nach einem der Ansprüche 1 - 14, wenn das Computerprogrammprodukt in der Computervorrichtung ausgeführt wird, umfasst.

## Revendications

1. Procédé destiné à gérer des dispositifs dans un réseau personnel, appelé ci-après réseau PAN, (100), dans lequel chaque dispositif présente un moyen de communication à courte portée (201, 211, 251) pour communiquer avec d'autres dispositifs dans le réseau PAN, et dans lequel les dispositifs qui sont à ce moment situés à une distance de communication à courte portée les uns des autres, appelés participants de réseau PAN (200, 210, 250), constituent le réseau PAN, et dans lequel chaque participant de réseau PAN est défini soit en qualité de dispositif de contrôleur de réseau PAN (200, 210) soit en qualité de dispositif auxiliaire de réseau PAN (250) en fonction de caractéristiques du dispositif, **caractérisé en ce que** le procédé comporte les étapes ci-dessous consistant à :
synchroniser, entre au moins les dispositifs de contrôleur de réseau PAN (200, 210), des informations afférentes à un réseau PAN concernant chaque dispositif dans le réseau PAN en communiquant lesdites informations afférentes à un réseau PAN concernant chaque dispositif au moins aux dispositifs de contrôleur de réseau PAN (200, 210) ;
commander, par le biais d'un dispositif de gestion de réseau PAN (200 ou 210), au moins l'un des participants de réseau PAN, dans lequel le dispositif de gestion de réseau PAN est un contrôleur de réseau PAN lequel est utilisé pour le moment en vue de commander ledit au moins l'un des participants de réseau PAN ; et
commander, par le biais du dispositif de gestion de réseau PAN lequel est utilisé pour le moment en vue de commander ledit au moins l'un des participants de réseau PAN, l'utilisation par ledit au moins l'un des participants de réseau PAN d'un moyen d'accès externe résidant dans l'un quelconque des participants de réseau PAN.

2. Procédé selon la revendication 1, dans lequel le dispositif de gestion de réseau PAN (200 ou 210) est un dispositif de contrôleur utilisateur, lequel est le dispositif de contrôleur de réseau PAN qui est à ce moment utilisé par un utilisateur.

3. Procédé selon la revendication 1 ou 2, dans lequel un participant de réseau PAN est défini en qualité de dispositif de contrôleur de réseau PAN si le participant de réseau PAN présente une interface utilisateur (202, 212) dotée de caractéristiques d'entrée qui permettent à un utilisateur de gérer le réseau PAN à partir du participant de réseau PAN et de caractéristiques de sortie pour présenter l'état du réseau PAN à l'utilisateur.

4. Procédé selon l'une quelconque des revendications 1 à 3, dans lequel au moins l'un des dispositifs, appelé un point d'accès global, appelé ci-après point GAP (210), présente un moyen d'accès externe (215) destiné à permettre la communication avec un réseau externe, et dans lequel l'étape de commande implique en outre que le dispositif de gestion de réseau PAN (200 ou 210) commande ledit au moins l'un des participants de réseau PAN en envoyant une commande de sélection d'accès audit au moins l'un des participants de réseau PAN (200, 210, 250), laquelle commande de sélection d'accès est utilisée pour commander l'utilisation du moyen d'accès externe (215) par ledit au moins l'un des participants de réseau PAN.

5. Procédé selon la revendication 4, dans lequel la commande de sélection d'accès comporte une commande visant à définir ledit au moins l'un des participants de réseau PAN (200, 210, 250) sur un mode de sélection d'accès.

6. Procédé selon la revendication 5, dans lequel le mode de sélection d'accès est un mode de commande à distance, dans lequel mode ledit au moins l'un des participants de réseau PAN (200, 210, 250) est instruit sur la façon d'utiliser ledit au moins l'un des points GAP (210) pour son accès externe.

7. Procédé selon la revendication 5, dans lequel le mode de sélection d'accès est un mode à critères de sélection commandés à distance, dans lequel mode ledit au moins l'un des participants de réseau PAN (200, 210, 250) est chargé d'utiliser ledit au moins l'un des points GAP pour son accès externe sur la base de critères et de priorités reçus à partir du dispositif de gestion de réseau PAN (200 ou 210).

8. Procédé selon la revendication 5, dans lequel le mode de sélection d'accès est un mode indépendant, dans lequel mode ledit au moins l'un des participants de réseau PAN (200, 210, 250) est chargé d'utiliser ledit au moins l'un des points GAP sur la base de ses critères et priorités internes.

9. Procédé selon l'une quelconque des revendications 1 à 8, dans lequel les informations afférentes à un réseau PAN communiquées au moins aux dispositifs de contrôleur de réseau PAN (200, 210) comportent au moins une identité de chaque participant de réseau PAN.

10. Procédé selon l'une quelconque des revendications 1 à 9, dans lequel l'étape de communication est mise en oeuvre en envoyant des messages à un groupe de multidiffusion comportant au moins les dispositifs de contrôleur de réseau PAN (200, 210).

11. Procédé selon l'une quelconque des revendications 1 à 10, dans lequel l'étape de communication est mise en oeuvre en envoyant, par le biais de chaque participant de réseau PAN (200, 210, 250), des informations afférentes à un réseau PAN le concernant, au moins aux dispositifs de contrôleur de réseau PAN (200, 210), à chaque fois qu'une modification se produit dans les informations afférentes à un réseau PAN du participant de réseau PAN.

12. Procédé selon l'une quelconque des revendications 1 à 11, dans lequel l'étape de communication est mise en oeuvre en envoyant, par le biais de chaque participant de réseau PAN (200, 210, 250), des informations afférentes à un réseau PAN le concernant, lors de la réception d'une demande visant à envoyer ses informations afférentes à un réseau PAN.

13. Procédé selon l'une quelconque des revendications 1 à 12, dans lequel l'étape de communication est mise en oeuvre périodiquement.

14. Procédé selon l'une quelconque des revendications 1 à 13, dans lequel au moins l'un des dispositifs est un dispositif de liaison dédiée, appelé ci-après dispositif DLD, (115), dans lequel le moyen de communication à courte portée n'est apte qu'à communiquer avec une entité homologue de dispositif DLD (114), et dans lequel l'entité homologue de dispositif DLD est un dispositif qui présente un second moyen de communication à courte portée apte à communiquer avec le dispositif DLD, outre son moyen de communication à courte portée destiné à communiquer avec d'autres dispositifs dans le réseau PAN, dans lequel le procédé comporte en outre l'étape ci-dessous consistant à :
exporter, par le biais de l'entité homologue de dispositif DLD, des informations afférentes à un réseau PAN du dispositif DLD vers au moins les dispositifs de contrôleur de réseau PAN (200, 210).

15. Protocole de communication destiné à gérer des dispositifs dans un réseau personnel, appelé ci-après réseau PAN (100), dans lequel chaque dispositif présente un moyen de communication à courte portée (201, 211, 251) pour communiquer avec d'autres dispositifs dans le réseau PAN, et dans lequel les dispositifs qui sont à ce moment situés à une distance de communication à courte portée les uns des autres, appelés participants de réseau PAN (200, 210, 250), constituent le réseau PAN, et dans lequel chaque participant de réseau PAN est défini soit en qualité de dispositif de contrôleur de réseau PAN (200, 210), soit en qualité de dispositif auxiliaire de réseau PAN (250), en fonction de caractéristiques du dispositif, **caractérisé en ce que** le protocole de communication spécifie des messages permettant la mise en oeuvre des étapes ci-dessous consistant à :
synchroniser, entre au moins les dispositifs de contrôleur de réseau PAN (200, 210), des informations afférentes à un réseau PAN concernant chaque dispositif dans le réseau PAN, en communiquant lesdites informations afférentes à un réseau PAN concernant chaque dispositif au moins aux dispositifs de contrôleur de réseau PAN (200, 210) ;
commander, par le biais d'un dispositif de gestion de réseau PAN (200 ou 210), au moins l'un des participants de réseau PAN, dans lequel le dispositif de gestion de réseau PAN est un contrôleur de réseau PAN lequel est utilisé pour le moment en vue de commander ledit au moins l'un des participants de réseau PAN ; et
commander, par le biais du dispositif de gestion de réseau PAN lequel est utilisé pour le moment en vue de commander ledit au moins l'un des participants de réseau PAN, l'utilisation par ledit au moins l'un des participants de réseau PAN d'un moyen d'accès externe résidant dans l'un quelconque des participants de réseau PAN.

16. Protocole de communication selon la revendication 15, dans lequel au moins l'un des dispositifs, appelé un point d'accès global, appelé ci-après point GAP, (210) présente un moyen d'accès externe (215) destiné à permettre la communication avec un réseau externe, et dans lequel l'étape de commande implique en outre que le dispositif de gestion de réseau PAN (200 ou 210) commande ledit au moins l'un des participants de réseau PAN en envoyant un message de commande de sélection d'accès audit au moins l'un des participants de réseau PAN (200, 210, 250), lequel message de commande de sélection d'accès est utilisé pour commander l'utilisation du moyen d'accès externe (215) par ledit au moins l'un des participants de réseau PAN.

17. Protocole de communication selon la revendication 16, dans lequel le message de commande de sélection d'accès est un message de commande de mode de sélection d'accès visant à définir ledit au moins l'un des participants de réseau PAN (200, 210, 250) sur un mode de sélection d'accès.

18. Protocole de communication selon la revendication 17, dans lequel le mode de sélection d'accès est un mode de commande à distance, dans lequel mode le message de commande de mode de sélection d'accès comporte un identifiant d'un dudit au moins l'un des points GAP (210) que ledit au moins l'un des participants de réseau PAN (200, 210, 250) devrait utiliser pour son accès externe.

19. Protocole de communication selon la revendication 17, dans lequel le mode de sélection d'accès est un mode à critères de sélection commandés à distance, dans lequel mode le message de commande de mode de sélection d'accès comporte un critère de sélection d'accès définissant un critère sur lequel ledit au moins l'un des participants de réseau PAN (200, 210, 250) devrait baser son utilisation du moyen de sélection d'accès.

20. Protocole de communication selon la revendication 17, dans lequel le mode de sélection d'accès est un mode indépendant, dans lequel mode ledit au moins l'un des participants de réseau PAN (200, 210, 250) est chargé d'utiliser ledit au moins l'un des points GAP sur la base de ses critères et priorités internes.

21. Protocole de communication selon l'une quelconque des revendications 15 à 20, dans lequel les informations afférentes à un réseau PAN communiquées au moins aux dispositifs de contrôleur de réseau PAN (200, 210) comportent au moins une identité de chaque participant de réseau PAN.

22. Protocole de communication selon l'une quelconque des revendications 15 à 21, dans lequel l'étape de communication est mise en oeuvre en envoyant des messages à un groupe de multidiffusion comportant au moins les dispositifs de contrôleur de réseau PAN (200, 210).

23. Protocole de communication selon l'une quelconque des revendications 15 à 22, dans lequel l'étape de communication est mise en oeuvre par l'envoi, par chaque participant de réseau PAN (200, 210, 250), d'un message d'informations génériques de réseau PAN comportant des informations afférentes à un réseau PAN le concernant au moins aux dispositifs de contrôleur de réseau PAN (200, 210) à chaque fois qu'une modification se produit dans les informations afférentes à un réseau PAN du participant de réseau PAN.

24. Protocole de communication selon l'une quelconque des revendications 15 à 23, dans lequel l'étape de communication est mise en oeuvre par l'envoi, par chaque participant de réseau PAN (200, 210, 250), d'un message d'informations génériques de réseau PAN comportant des informations afférentes à un réseau PAN le concernant lors de la réception d'une demande visant à envoyer ses informations afférentes à un réseau PAN.

25. Protocole de communication selon l'une quelconque des revendications 15 à 24, dans lequel au moins l'un des dispositifs est un dispositif de liaison dédiée, appelé ci-après dispositif DLD, (115), dans lequel le moyen de communication à courte portée n'est apte qu'à communiquer avec une entité homologue de dispositif DLD (114), et dans lequel l'entité homologue de dispositif DLD est un dispositif qui présente un second moyen de communication à courte portée spécifiquement apte à communiquer avec le dispositif DLD, outre son moyen de communication à courte portée destiné à communiquer avec d'autres dispositifs dans le réseau PAN, dans lequel le protocole de communication spécifie en outre un message destiné à mettre en oeuvre l'étape ci-dessous consistant à :
exporter, par le biais de l'entité homologue de dispositif DLD, des informations afférentes à un réseau PAN du dispositif DLD vers au moins les dispositifs de contrôleur de réseau PAN (200, 210).

26. Dispositif de contrôleur de réseau PAN (200, 210) dans un réseau personnel, appelé ci-après réseau PAN, (100) destiné à gérer des dispositifs dans un réseau PAN, dans lequel les dispositifs qui sont à ce moment situés à une distance de communication à courte portée les uns des autres, appelés participants de réseau PAN, constituent le réseau PAN, **caractérisé en ce que** le dispositif de contrôleur de réseau PAN comporte :
un moyen de communication à courte portée (201, 211) pour communiquer des informations afférentes à un réseau PAN le concernant à au moins les autres dispositifs de contrôleur de réseau PAN dans le réseau PAN et pour synchroniser des informations afférentes à un réseau PAN concernant chaque dispositif dans le réseau PAN dans au moins les dispositifs de contrôleur de réseau PAN dans le réseau PAN ; et
une unité de commande (203, 213) pour commander au moins l'un des participants de réseau PAN lorsque le dispositif de contrôleur de réseau PAN est utilisé pour le moment en vue de commander ledit au moins l'un des participants de réseau PAN ; et dans lequel ladite unité de commande (203, 213) est agencée de manière à commander l'utilisation par ledit au moins l'un des participants de réseau PAN d'un moyen d'accès externe résidant dans l'un quelconque des participants de réseau PAN.

27. Dispositif de contrôleur de réseau PAN selon la revendication 26, **caractérisé en ce que** le dispositif de contrôleur de réseau PAN comporte en outre :
une interface utilisateur de réseau PAN (202, 212) présentant des caractéristiques d'entrée permettant à un utilisateur de gérer le réseau PAN à partir du dispositif et présentant des caractéristiques de sortie permettant de présenter l'état du réseau PAN à l'utilisateur.

28. Dispositif de contrôleur de réseau PAN selon la revendication 26 ou 27, dans lequel l'unité de commande (203, 213) est agencée de manière à commander l'utilisation par ledit au moins l'un des participants de réseau PAN d'un moyen d'accès externe résidant dans l'un quelconque des participants de réseau PAN en déclenchant une commande de sélection d'accès qui est envoyée par le moyen de communication à courte portée (201, 211) audit au moins l'un des participants de réseau PAN.

29. Dispositif de contrôleur de réseau PAN selon la revendication 28, dans lequel la commande de sélection d'accès est déclenchée suite à une action mise en oeuvre par l'utilisateur au niveau des caractéristiques d'entrée de l'interface utilisateur (202, 212).

30. Dispositif de contrôleur de réseau PAN selon la revendication 28 ou 29, dans lequel la commande de sélection d'accès comporte une commande visant à définir ledit au moins l'un des participants de réseau PAN sur un mode de sélection d'accès.

31. Dispositif de contrôleur de réseau PAN selon l'une quelconque des revendications 26 à 30, dans lequel le moyen de communication à courte portée (201, 211) est apte à envoyer des informations afférentes à un réseau PAN à un groupe de multidiffusion comportant au moins les dispositifs de contrôleur de réseau PAN dans le réseau PAN (100).

32. Dispositif de contrôleur de réseau PAN selon l'une quelconque des revendications 26 à 31, dans lequel le dispositif comporte en outre une mémoire (204, 214) destinée à stocker des informations afférentes à un réseau PAN le concernant et concernant les autres participants de réseau PAN.

33. Produit-programme informatique pouvant être chargé dans une mémoire d'un dispositif informatique numérique résidant dans chaque dispositif dans le réseau PAN, dans lequel le produit-programme informatique comporte des parties de code logiciel pour mettre en oeuvre le procédé selon l'une quelconque des revendications 1 à 14 lorsque le produit-programme informatique est exécuté sur un dispositif informatique.
